# EUROPEAN PATENT APPLICATION

(11) **EP 2 042 915 A1**
(43) Date of publication of application: **01.04.2009**
(21) Application number: 07790650.1
(22) Date of filing: 11.07.2007
(51) Int. Cl.: G02F 1/1334

(54) **LIQUID CRYSTAL OPTICAL DEVICE AND PROCESS FOR MANUFACTURING THE SAME**

(30) Priority: 14.07.2006 JP 2006194172
(71) Applicant: Asahi Glass Company, Limited, Chiyoda-ku Tokyo 100-8405 (JP)
(72) Inventor: NIIYAMA, Satoshi, Tokyo 100-8405 (JP); TANAKA, Remi, Tokyo 100-8405 (JP)
(74) Representative: Müller-Boré & Partner Patentanwälte
(86) International application number: PCT/JP2007/063846
(87) International publication number: WO 2008/007715

(57) **Abstract**

To provide a liquid crystal optical device showing a low haze value in the transparent state, further an excellent stability in the transparent-scattering characteristics and productivity, and to provide a production process thereof.

The liquid crystal optical device in the embodiment 1 of the present invention is a liquid crystal optical device 1 comprising a pair of insulating substrates 11 and 21, of which at least one is transparent, electrodes 12 and 22 formed on respective inner faces of the substrates, and a composite 50 comprising nematic liquid crystal and a cured material, interposed between the inner faces of the substrates. The composite 50 is obtained by curing the following curable compound in the following chiral nematic liquid crystal composition in a state where the liquid crystal composition is interposed between the inner faces of the insulating substrates and the liquid crystal is aligned:
chiral nematic liquid crystal composition: a liquid crystal composition showing a chiral nematic phase, comprising nematic liquid crystal and a curable compound, wherein at least a part of the curable compound is an optically active material having an optical rotatory power, and the optically active material having an optical rotatory power consists substantially solely of the curable compound.

## Description

### TECHNICAL FIELD

The present invention relates to a liquid crystal optical device and a process for its production.

### BACKGROUND ART

Liquid crystal optical devices have merits such as low power consumption, small thickness or light weight, and they are widely used for many electronic devices such as cellphones, digital cameras, portable information devices or TVs. Among these, in recent years, liquid crystal optical devices are proposed, in which electric field is controlled to control alignment of liquid crystal molecules to thereby change a light-scattering state.

Further, liquid crystal optical devices (hereinafter referred to as liquid crystal/cured material composite device) such as LCPC (Liquid Crystal Polymer Composite), PDLC (Polymer Dispersed Liquid Crystal) or NCAP (Nematic Curvilinear Aligned Phase) which each comprises a composite of a liquid crystal and a cured material, are known (see Patent Document 1). In general, in a liquid crystal/cured material composite device, a nematic liquid crystal phase is uniformly dispersed in a resin phase, the device is configured to control transparency/scattering of light by switching matching/mismatching of refractive indices of the resin phase and the liquid crystal phase by applying a voltage. This liquid crystal/cured material composite device requires no polarizer in principle, and accordingly, it has high light transmittance. For this reason, for example, such a device is suitable for applications such as light shutters to be used for e.g. sunroofs for automobiles, show windows or various types of bulletin boards capable of displaying characters or patterns, or instrument panels or windows of automobiles. As an example of such a liquid crystal/cured material composite device, a device showing a transparent state at a time of no voltage application, is also reported (see Patent Document 2).

However, most of the above liquid crystal/cured material composite devices are usually required to contain the cured material in an amount of usually at least 20 mass%, preferably at least 30 mass% (see Patent Documents 3 and 4). Here, since the liquid crystal phase shows a plurality of refractive indices while the cured material phase usually shows only one refractive index, there has been a problem that when the device is used for e.g. a large window glass, the haze value of the device in a transparent state is high except in a direction where the refractive indices agree with each other. Namely, there has been a problem that in the transparent state, when a panel is observed in a direction perpendicular to the panel, the panel looks transparent, but when the panel is observed in a slant direction, the panel looks not sufficiently transparent. Further, in a case of a liquid crystal/cured material composite device produced by a polymerization-phase-separation method (a method of producing phase separation of liquid crystal and cured material by polymerizing a liquid crystal mixture containing more amount of monomer than liquid crystal, that is described in Examples of Patent Documents 3 and 4), when a liquid crystal phase having high heat-resistant temperature, that is, high phase-transition temperature T_{c} is required, in order to prevent liquid crystal phase from segregating in a uniform liquid crystal mixture before polymerization, it is necessary to cure the liquid crystal mixture by polymerization while it is heated. In order to solve the above two problems, a PSCT (Polymer Stabilized Cholesteric Texture) is disclosed (see Patent Document 5), which is produced by adding a small amount of a curable compound to chiral nematic liquid crystal having a helical pitch selectively reflecting visible light, to stabilize focal conic alignment of the chiral nematic liquid crystal so that the liquid crystal shows a scattering state at a time of no voltage application.
Patent Document 1: U. S. Patent No. 4,688,900
Patent Document 2: JP-A-2000-119656
Patent Document 3: U. S. Patent No. 4,834,509
Patent Document 4: U. S. Patent No. 5,200,845
Patent Document 5: U. S. Patent No. 5,437,811

### DISCLOSURE OF THE INVENTION

### PROBLEMS TO BE SOLVED BY THE INVENTION

However, in the PSCT disclosed in Patent Document 5, when a liquid crystal optical device showing a light-scattering state at a time of no-voltage application and showing a transparent state at a time of voltage application is provided, it is necessary to cure a curable compound while a voltage is applied to the liquid crystal composition. For these reasons, there has been a problem that particularly in a case of a large-sized liquid crystal optical device, it is difficult to produce entirety of such a device uniformly, and thus, its productivity is poor. Further, chiral nematic liquid crystal may show several alignments, i.e. so-called multi stable, and therefore the alignment is easily changed by applying an external pressure thereon. Accordingly, there was a problem of lack of stability in transparent-scattering characteristics.

The present invention has been made under the circumstances, and it is an object of the present invention to provide a liquid crystal optical device showing a low haze value in a transmission state and an excellent stability in transparent-scattering characteristics and productivity, and a production process thereof.

### MEANS TO ACCOMPLISH THE OBJECT

The present invention has been made to solve the above problems, and provides the following invention.
(1) A liquid crystal optical device comprising:
   a pair of insulating substrates, of which at least one is transparent,
   electrodes formed on respective inner faces of the insulating substrates, and
   a composite of nematic liquid crystal and a cured material, interposed between the inner faces of the insulating substrates, wherein:
      the composite is obtained by curing the following curable compound in the following chiral nematic liquid crystal composition in a state where the liquid crystal composition is interposed between the inner faces of the insulating substrates and the liquid crystal is aligned:
         chiral nematic liquid crystal composition: a liquid crystal composition comprising nematic liquid crystal and a curable compound, and showing a chiral nematic phase, wherein at least a part of the curable compound is an optically active material having an optical rotatory, and the optically active material having an optical rotatory consists substantially solely of the curable compound. Thus, a liquid crystal optical device showing a low haze value in a transparent state, and an excellent stability in transparent-scattering characteristics and productivity, can be obtained.
(2) The liquid crystal optical device according to (1), which is obtainable by curing the curable compound in a state where no voltage is applied to the electrodes.
(3) The liquid crystal optical device according to (1) or (2), wherein the curable compound is cured in a state where the chiral nematic liquid crystal composition is in focal conic alignment. Thus, it is possible to obtain a liquid crystal optical device which exhibits a scattering state at the time of applying no voltage.
(4) The liquid crystal optical device according to any one of (1) to (3), wherein the chiral nematic liquid crystal composition further contains a curable compound which is not an optically active material. Thus, it is possible to adjust the content of a cured material in a liquid crystal/ cured material composite, and it is possible to stabilize a transparent-scattering operation by applying a voltage.
(5) The liquid crystal optical device according to any one of (1) to (4), wherein the total amount of the curable compound is from 0.1 to 20 mass% based on the entire chiral nematic liquid crystal composition. Thus, it is possible to obtain a liquid crystal optical device certainly showing a low haze value in a transparent state
(6) The liquid crystal optical device according to any one of (1) to (5), wherein the dielectric anisotropy of the chiral nematic liquid crystal composition is positive. Thus, it is possible to obtain a liquid crystal optical device.having high transmittance at the time of applying a voltage and a good contrast.
(7) A process for producing a liquid crystal optical device comprising a composite of nematic liquid crystal and a cured material, which comprises:
   a step of forming electrodes on inner faces of a pair of insulating substrates, of which at least one is transparent,
   a step of bonding the insulating substrates so that the inner faces of the insulating substrates face each other via the following chiral nematic liquid crystal composition, and
   a step of forming the composite by curing the curable compound in the liquid crystal composition in a state where the liquid crystal composition is interposed between the inner faces of the insulating substrates, and the liquid crystal is aligned:
      Chiral nematic liquid crystal composition: a liquid crystal composition comprising nematic liquid crystal and a curable compound, and showing a chiral nematic phase, wherein at least a part of the curable compound is an optically active material having an optical rotatory, and the optically active material having an optical rotatory consists substantially solely of the curable compound.
(8) The process for producing a liquid crystal optical device according to (7), wherein the curing of the curable compound is carried out in a state where no voltage is applied to the electrodes.
(9) The process for producing a liquid crystal optical device according to (7) or (8), wherein the curable compound is cured in a state where the chiral nematic liquid crystal composition is in focal conic alignment. Thus it is possible to obtain a liquid crystal optical device which exhibits a scattering state at the time of applying no voltage.
(10) The process for producing a liquid crystal optical device according to (9), wherein a voltage is applied to the chiral nematic liquid crystal composition for the focal conic alignment. Thus, the liquid crystal composition can readily be in focal conic alignment.
(11) The process for producing a liquid crystal optical device according to (9), wherein the chiral nematic liquid crystal composition is heated or cooled for the focal conic alignment. Also by the production process, the liquid crystal composition can readily be in focal conic alignment.

### EFFECTS OF THE INVENTION

According to the present invention, it is possible to provide a liquid crystal optical device having a low haze value in a transparent state and further an excellent stability in transparent-scattering characteristics and productivity, and a process for its production.

### BRIEF DESCRIPTION OF THE DRAWINGS

Fig. 1: A view schematically showing the construction of a liquid crystal optical device according to an embodiment of the present invention.
Fig. 2: A view showing an example of the production flow of the liquid crystal optical device according to an embodiment of the present invention.

### MEANINGS OF REFERENCE SYMBOLS

1: Liquid crystal optical device
11: First transparent substrate
12: First transparent electrode
13: First insulation film
14: First alignment film
21: Second transparent substrate
22: Second transparent electrode
23: Second insulation film
24: Second alignment film
30: Sealing member
40: Spacer
50: Composite layer

### BEST MODE FOR CARRYING OUT THE INVENTION

Now, embodiments of the present invention will be described. Here, the present invention is by no means limited to these embodiments. Further, in order to simplify explanation, the following description and drawings are appropriately simplified. In the specification of the present application, a composite of liquid crystal and a cured material will be referred to as "a liquid crystal/cured material composite" or simply as "a composite". Further, chiral nematic liquid crystal composition will be referred to simply as "a liquid crystal composition".

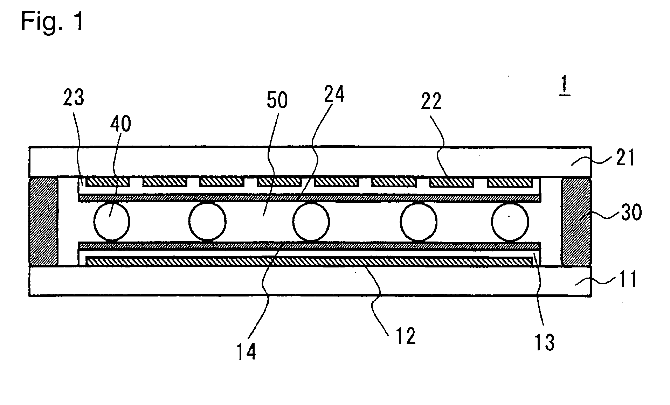

Fig. 1 is a cross sectional view schematically showing an example of the construction of a liquid crystal optical device according to the embodiment of the present invention. As shown in Fig. 1, a liquid crystal optical device 1 according to the embodiment of the present invention comprises a first transparent substrate 11, a first transparent electrode 12, a first insulation film 13, a first alignment film 14, a second transparent substrate 21, a second transparent electrode 22, a second insulation film 23, a second alignment film 24, a sealing member 30, a spacer 40 and a composite layer 50.

Specifically, the liquid crystal optical device 1 has a construction in which the first transparent substrate 11 and second transparent substrate 21 face each other and the first and second transparent substrates 11 and 21 sandwich the composite layer 50 of liquid crystal/a cured material.

The first and second transparent substrates 11 and 21 are each an insulating substrate, and for example, it is a glass substrate, a resin substrate or a resin film substrate made of e.g. polycarbonate or an acrylic resin. Here, in this embodiment, the first and second transparent substrates 11 and 21 are employed, but both of these substrates are not necessarily transparent, and it is sufficient that only one substrate is transparent.

Further, the shape of these insulating substrates may be a flat plate, or it may be entirely or partially curved. The thickness of the insulating substrates may be appropriately selected, and usually, it is preferably from 0.4 to 10 mm.

On an inner face of the first transparent substrate 11, the first plural transparent electrodes 12 are formed in a stripe shape. Meanwhile, on an inner face of the second transparent substrate 21, the second plural transparent electrodes 22 are formed in a stripe shape. Here, the second plural transparent electrodes 22 are formed so as to cross substantially perpendicularly to the first plural transparent electrodes 12. The first and second transparent electrodes 12 and 22 are each made of e.g. ITO (Indium Tin Oxide). Either one of the first and second transparent electrodes 12 and 22 may be a reflective electrode of e.g. Al or a dielectric multilayer film. Of course the shape of the electrode is not limited to a perpendicularly crossed stripe shape, but the electrode may cover entire substrate surface or it may have a shape capable of displaying a specific mark or a character.

The first and second insulation films 13 and 23 are formed so as to cover the first and second transparent electrodes 12 and 22, respectively. The first and second insulation films 13 and 23 are provided for the purpose of improving electric insulation, and they are made of a metal oxide such as SiO₂, TiO₂ or Al₂O₃ or other insulating materials. Here, the first and second insulation films 13 and 23 are not essential.

On the first and second insulation films 13 and 23, the first and second alignment films 14 and 24 are formed respectively. The alignment films 14 and 24 are formed so as to contact with liquid crystal in the composite layer 50 to align the liquid crystal in a predetermined direction. In the embodiment of the present invention, the presence or absence of the alignment film, a pretilt angle thereof and the presence or absence of rubbing treatment to an alignment film may not be restricted, but in order to increase the optical contrast between the transparent state and the light scattering state, it is preferred that the alignment film having a pretilt angle of at most 10° is used without carrying out rubbing treatment.

The sealing member 30 is formed between the first and second transparent substrates 11 and 21 and along the periphery of the first and second transparent substrates 11 and 21. The first and second transparent substrates 11 and 21 are joined by means of the sealing member 30. For the material of the sealing member 30, e.g. a UV curable resin is employed. The distance between the inner faces of the first and second transparent substrates 11 and 21, that is, the thickness of the composite layer 50 (cell gap) is constant, and the height of the sealing member 30 is equal to the distance between inner faces of the first and second transparent substrates 11 and 21.

The liquid crystal optical device 1 of Fig. 1 has a flat shape, but the liquid crystal optical device of the present invention does not necessarily have a flat shape, but it may be partially or entirely curved depending on its application. Namely, it may have a three-dimensional shape. However, also in this case, the distance between inner faces of the first and second transparent substrates 11 and 21, that is, the thickness of the composite layer 50 (cell gasp) is constant.

The spacer 40 is uniformly spread in a space enclosed by the first and second transparent substrates 11 and 21 and the sealing member 30. The spacer 40 controls cell gap. The cell gap, that is the diameter of the spacer 40, is preferably from 2 to 50 µm, more preferably from 4 to 30 µm. When the cell gap is too small, the contrast decreases, and if the cell gap is too large, the driving voltage increases. The spacer 40 is a hard material such as glass particles, silica particles or crosslinked acryl particles. Here, the spacer 40 is not necessarily spherical particles but it may be a rib-shaped spacer formed on one of the substrates.

The composite layer 50 is sealed in a space (hereinafter, referred to also as cell space) enclosed by the first and second transparent substrates 11 and 21, and the sealing member 30. The composite layer 50 is made of a liquid crystal/cured material composite obtained by curing a curable compound in the liquid crystal composition of the present invention by polymerization in a state that the liquid crystal composition is filled in a cell space and the liquid crystal is aligned. The content of the curable compound in the liquid crystal composition (this substantially equals to the content of the cured material of the curable compound contained in the liquid crystal/cured material composite) is preferably from 0.1 to 20 mass%. If it is less than 0.1 mass%, in a scattering state of the liquid crystal/cured material composite, the liquid crystal phase cannot be divided into domain structures each having more effective shape, and it is not possible to obtain a desired transparent-scattering characteristics. On the other hand, if it exceeds 20 mass%, in the same manner as a conventional liquid crystal/cured material composite, the haze value in a transparent state increases. Further, the content of the curable compound in the liquid crystal composition is more preferably from 0.5 to 10 mass% since it becomes possible to increase scattering intensity in a scattering state of the liquid crystal/cured material composite and decrease a voltage at which a transparent-scattering state is switched.

As described above, the content of a curable compound in the liquid crystal composition is preferably from 0.1 to 20 mass% based on the liquid crystal composition, and it is preferably appropriately selected from a range of from 0.1 to 20 mass% depending on HTP (Helical Twisting Power) of the curable compound that is an optically active material. When the curable compound being an optically active material has high HTP, only a small amount of the curable compound as an optically active material is required to be added to a nematic liquid crystal to prepare a liquid crystal composition that as a whole shows a chiral nematic phase. For example, in a case of employing a curable compound being an optically active material having a large HTP (HTP is about from 30 to 60), the most preferred content of the curable compound in the liquid crystal composition is from 0.5 to 5 mass%. When the HTP of the curable compound being an optically active material is smaller than 30, the content is preferably from 0.5 to 10 mass% as described above.

The liquid crystal composition of the present invention is a liquid crystal composition comprising nematic liquid crystal and a curable compound, and showing a chiral nematic phase, wherein at least a part of the curable compound is an optically active material (namely, a chiral agent) having optical rotatory, and the optically active material having an optical rotatory consists substantially solely of the curable compound. As the nematic liquid crystal, two or more types of nematic liquid crystals may be used in combination. When an optically active material showing optical rotatory, namely, a chiral agent, in an amount of at least a predetermined amount is added to a nematic liquid crystal, the nematic liquid crystal changes into chiral nematic liquid crystal with phase transition(referred to also as "Cholesteric liquid crystal) having a helical structure. Here, the period of the helical structure, that is, a helical pitch p, is represented by p=1/(c·HTP) using the content c and HTP of a chiral agent.

Here, a chiral nematic phase means a state that, provided that a twist angle of the liquid crystal between the first transparent substrate 11 and the second transparent substrate 21 is θ, θ>360° is satisfied. In other words, when the cell gap is represented as d, a chiral nematic phase means that the helical pitch satisfies p<d. The twist angle of nematic liquid crystal and chiral nematic liquid crystal can be measured, for example, by sandwiching the liquid crystal composition between a pair of transparent substrate at least one of whose inner face is provided with an alignment film subjected to rubbing treatment and showing a pretilt angle of at most 10°, and observing transmitted light by a polarizing microscopic observation while a polarizing plate is rotated. Further, the twist angle can be obtained by sandwiching the liquid crystal composition in a wedge-shaped cell and observing the distance between disclination lines.

Further, the entire chiral agent is substantially a curable compound. Using this curable compound, after the liquid crystal composition is sandwiched between substrates provided with electrodes, the curable compound is cured to form plural domains in the liquid crystal phase. At the same time, the curable optically active compound loses a part or all of optical rotatory function as a chiral agent since the curing makes it polymerize. Accordingly, most of the chiral nematic liquid crystal changes into nematic liquid crystal with phase transition in a process of curing the curable compound. Here, the nematic phase means a state that θ≦3602°, namely p≧d.

A curable chiral agent may, for example, suitably be an optical rotatory compound of dextro-rotatory such as Paliocolor LC 756 manufactured by BASF Corporation. Of course, it is possible to use an optical rotatory material of levo-rotatory as a curable chiral agent. It is possible to provide a dextro-rotatory compound with relatively low cost by preparing the optical rotary compound from an optical rotatory material present in natural world, as a starting material. Further, as a curable chiral agent, it is also possible to use a dextro rotatory chiral agent and a levo-rotatory chiral agent in combination for the purpose of e.g. adjusting a helical pitch of a chiral nematic liquid crystal composition to an optimum value.

Further, the liquid crystal composition of the present invention may also contain a small amount of a non-curable chiral agent so long as a nematic phase is shown after a curable compound is cured. Namely, it is possible to develop the effect of the present invention so long as it is a liquid crystal composition which undergoes phase transition from chiral nematic liquid crystal to nematic liquid crystal attributable to curing of a curable compound.

Further, in the liquid crystal composition of the present invention, a curable compound that is not optically active material may be contained. Such a curable compound may, for example, be an alkyl acrylate, an alkyl diacrylate, a polyether acrylate, a polyether diacrylate or a polyether type urethane acrylate. The curable compound that is not an optically active compound may further be a curable compound having a mesogenic structure. Such a curable compound having a mesogenic structure may, for example, be the following compounds (curable compounds represented by the formulae (2) and (4) described in Patent Document 2).

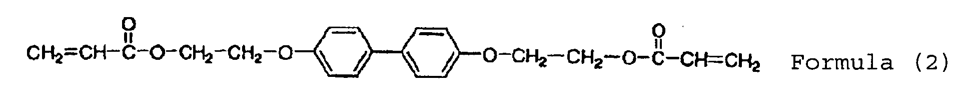

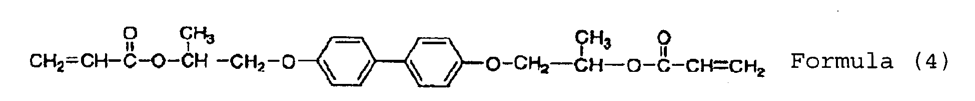

If the content of a non-optically active curable compound in the liquid crystal composition of the present invention is too high, the haze value at transparent state may undesirably become high. Accordingly, it is preferred that the total amount of the curable compound (the amount including a curable compound as an optically active compound) in the liquid crystal composition of the present invention is preferably at most 20 mass%, particularly preferably at most 10 mass% based on the total amount of a liquid crystal composition. Further, as described above, in a case of employing a curable compound having high HTP (ranging from about 30 to 60) as the curable compound as an optically active material, the total amount of the curable compound is preferably at most 5 mass% based on the total amount of the liquid crystal composition. Further, the content of a non-optically active curable compound is preferably from 0.1 to 10 mass%, particularly preferably from 0.5 to 5 mass% based on the total amount of the liquid crystal composition.

The liquid crystal obtained by curing the curable compound from the liquid crystal composition of the present invention is considered to be nematic liquid crystal having liquid crystal physical properties substantially equal to those of a mixture obtained by excluding the curable compound (also including the curable compound other than the curable chiral agent) from the liquid crystal composition of the present invention, except the influence of the cured material. Accordingly, the mixture is prepared so as to satisfy liquid crystal properties of nematic liquid crystal required for the liquid crystal/cured material composite.

In the present invention, all or most of a chiral agent contained in the liquid crystal composition before curing is curable. Further, as mentioned above, the helical pitch of the entire liquid crystal composition is adjusted by the content and HTP of the chiral agent. Such a liquid crystal composition before curing is aligned to be focal conic alignment, and then a chiral agent having curability is cured to form a liquid crystal/cured material composite. Here, the helical pitch of a liquid crystal composition strongly affects the texture in a light-scattering state of the liquid crystal composition at the time of focal conic alignment. Namely, when a liquid crystal/cured material composite is formed by curing a curable compound in a state where a liquid crystal composition shows strong light-scattering, it is possible to obtain an electrooptical device having high optical contrast between the transparent state and the light-scattering state at the time of voltage application/non-voltage application, such being preferred. The helical pitch of the liquid crystal composition is preferably from 0.6 to 4 µm. Further, the liquid crystal composition has good light scattering characteristics in the case of focal conic alignment, and therefore the helical pitch is preferably from 0.8 to 3 µm.

On the other hand, in the present invention, it is possible to develop the effect of the present invention also in a case other than the case where the liquid crystal composition is aligned to be focal conic alignment. In a case where an alignment film formed on the surface of a substrate contacting with the liquid crystal composition has a pretilt angle of at most 10° and further the alignment film is subjected to rubbing treatment in one direction, there is a case where the liquid crystal composition shows planar alignment having a helical axis almost perpendicular to the substrate surface. The liquid crystal composition is aligned to be planar alignment, and then a curable compound contained in the liquid crystal composition is cured, whereby it is also possible to form a liquid crystal optical device showing a light-scattering state at the time of no voltage application and showing a transparent state at the time of voltage application. In the case where the liquid crystal composition is in planar alignment, a cell shows a transparent state before curing, but it shows a scattering state in a curing step of a curble compound in the liquid crystal composition. However, the contrast between the light scattering state and the transparent state is more preferable when the liquid crystal composition is aligned to be focal conic alignment.

It is possible to develop the effect of the present invention in either case where the dielectric anisotropy (Δε) of the liquid crystal composition is positive or negative. Further, it is also possible to develop such an effect in either case where the pretilt angle of the alignment film provided on the inner face of a substrate is at most 10° or at least 60°. The rubbing treatment may be applied to the alignment film.

The chiral nematic liquid crystal composition having positive dielectric anisotropy is aligned to be focal conic alignment, and then a chiral agent having curability contained in the liquid crystal composition is cured, whereby it is possible to efficiently divide the nematic phase produced in the process of a curing reaction into plural domains by a cured material produced by the curing reaction. Accordingly, it is possible to extremely easily obtain a liquid crystal optical device showing a scattering state at the time of no voltage application and a transparent state at the time of voltage application from the liquid crystal composition of the present invention. The nematic liquid crystal divided into domains are randomly aligned every domain. Specifically, directors namely, the directions of liquid crystal molecules in one domain, are the same, but directors of liquid crystal molecules in adjacent domains are differently aligned each other. Accordingly, such adjacent domains are assumed to have different average refractive indices and show a scattering state at the time of no voltage application. On the other hand, at the time of voltage application, liquid crystal molecules having positive dielectric anisotropy are aligned perpendicular to a transparent substrate in each domain, whereby it is assumed that adjacent domains have almost the same average refractive indices and show a transparent state with each other.

It is possible to confirm the phase change from a chiral nematic phase to a nematic phase occurred by curing a curable compound in a liquid crystal composition, by measurement of an N-I phase transition point (nematic phase-isotropic phase transition point) in a liquid crystal, other than measurement of a twist angle of a liquid crystal as mentioned above. Specifically, (a) an N-I phase transition point (transition point a) before adding a curable compound (also containing a curable compound which is not an optical active material) thereto, (b) an N-I phase transition point (transition point b) of a nematic liquid crystal (namely, the chiral nematic liquid crystal composition of the present invention) after adding a curable compound (containing a curable compound which is not an optical active material) thereto and (c) an N-I phase transition point (transition point c) of nematic liquid crystal in a liquid crystal/cured material composite obtainable by curing a curable compound in a chiral nematic liquid crystal composition are measured, and (transition point a) and (transition point b) are found to be different and further (transition point a) and (transition point c) are found to be the same value, whereby it is possible to confirm the phase change. Though (transition point a) and (transition point b) are different depending upon the presence or absence of the curable compound, the nematic liquid crystal obtained by curing the curable compound from the liquid crystal composition of the present invention is considered to be the nematic liquid crystal having liquid crystal physical properties substantially equal to those of a mixture having a curable compound (also containing a curable compound which is not an optical active material) excluded from the liquid crystal composition of the present invention, except the influence of the cured material. Accordingly, it is thereby possible to confirm that a liquid crystal in the liquid crystal/cured material composite is nematic liquid crystal when (transition point a) and (transition point b) have different values and further (transition point c) and (transition point a) have the same value.

Further, it is also possible to confirm it in such a manner that an external pressure is once applied to a liquid crystal optical device, and then the external pressure is removed, followed by observing its appearance. Chiral nematic liquid crystal essentially has memory effect of the alignment. Accordingly, if liquid crystal alignment is disordered by once applying the external pressure, the alignment is still disordered even when such an external pressure is removed, whereby an inuniformity occurs in a scattering state. On the other hand, the nematic liquid crystal has no memory effect of the alignment, and therefore no change is observed in appearance even when an external pressure is removed after applying the external pressure. Thus, it is also possible to confirm that liquid crystal in the liquid crystal/cured material composite is nematic liquid crystal in this manner.

Liquid crystal constituting the liquid crystal optical device of the present invention is nematic liquid crystal which is entirely different from PSCT disclosed in Document 5 in which a curable compound is cured in a state where an electric field is applied to chiral nematic liquid crystal to stabilize its alignment state.

26 In a process of forming a liquid crystal/cured material composite, it is not necessary to cure a curable compound while applying a voltage to a liquid crystal composition, and a predetermined alignment state such as focal conic alignment may be imparted on a liquid crystal composition before curing. Namely, by utilizing memory effect of the alignment inherently provided to chiral nematic liquid crystal, external stimulation such as application of electric field, heating or cooling is applied to a liquid crystal composition before curing, whereby a predetermined alignment state such as focal conic alignment is memorized. Then, a curable compound is cured to form a liquid crystal/cured material composite. At that time, a predetermined alignment state is already memorized to a liquid crystal composition, whereby it is not necessary to uniform the alignment by means of e.g. voltage application again, and a curable compound may only be cured in a state of no voltage application.

As an alignment of liquid crystal, when a light scattering state being effective as a state of focal conic alignment is imparted thereon and then a curable compound is cured, it is possible to improve a light scattering capability in a state of no voltage application, such being preferable.

Further, differently from a case where the liquid crystal is dissolved in a curable compound to prepare a product having entirely isotropic phase and subjecting it to a polymerization phase separation method to obtain a liquid crystal/cured material composite, even in a case where a liquid crystal phase having high phase transition temperature Tc is required, there is no need of heating treatment for preventing segregation of liquid crystal phase from the liquid crystal mixture before curing.

Further, all or most of a liquid crystal phase in a liquid crystal/cured material composite obtainable by curing a curable chiral agent is a nematic phase, and therefore the stability in transparent-scattering properties is excellent. In a case where chiral nematic liquid crystal is contained in a liquid crystal optical device as in PSCT, the alignment of liquid crystal in a liquid crystal optical device will be changed at the time of applying e.g. an external pressure in one part on the liquid crystal optical device, and such an alignment change will be memorized by the chiral nematic liquid crystal, whereby an optical inuniformity may occur in a light scattering state. However, in the novel liquid crystal optical device disclosed in the present invention, a liquid crystal phase present therein is a nematic liquid crystal phase, and has no memory effect of liquid crystal alignment as in a chiral nematic liquid crystal phase, and therefore even when such a liquid crystal alignment is changed by applying an external pressure in one part on the present device, the alignment goes back to the original alignment if the external pressure is removed, whereby no optical inuniformity occurs in a light scattering state of the device at the time of no voltage application, such being preferable.

Further, the liquid crystal/cured material composite in the liquid crystal optical device of the present invention has a lower content of a cured material as compared with a conventional dispersed liquid crystal. Accordingly, the liquid crystal optical device of the present invention has a lower haze value in a transparent state even if the device has a large area, and its transparency is good regardless of viewing angle of the device.

Nematic liquid crystal obtained by dividing a liquid crystal/cured material composite into plural domains by a small amount of a cured material, is randomly oriented in every domain. A construction in which nematic liquid crystal in each domain is randomly oriented in every domain to obtain a scattering state, is considered to be an ideal construction from the viewpoint of e.g. a haze value or the stability of transparent-scattering characteristics in the liquid crystal/cured material composite device, but such a construction was not achieved heretofore. By the present invention, it is possible to realize the above construction.

Further, in either case where the dielectric anisotropy of the liquid crystal composition of the present invention is positive or negative, it is feasible to realize a phase change of a liquid crystal before and after curing a curable compound disclosed in the present invention, but it is prefrable that liquid crystal having positive dielectric anisotropy is used to obtain an electrooptical device having high optical contrast between the time of no voltage application and the time of voltage application. Further, in order to reduce a driving voltage, the dielectric anisotropy is preferably high. Further, in order to improve a transparent-scattering contrast by increasing scattering intensity, it is preferable to increase the refractive index anisotropy (Δn) of the liquid crystal composition. On the other hand, if the dielectric anisotropy is too high, the electric insulation performance (specific resistance value) may decrease. Further, if the refractive index anisotropy is too high, the durability against UV light probably decreases.

In the liquid crystal composition of the present invention, a curing agent for initiating curing of the above curable compound or a curing accelerator (such as a curing catalyst) for accelerating curing may be also contained. Particularly, it is preferred to employ a polymerization initiator. For example, in a case where a curing reaction is induced by photo-polymerization, it is possible to use a usual photo-polymerization initiator such as a benzoin ether type, acetophenone type or phosphine oxide type. In the case of using a curing initiator or a curing accelerator, its amount is preferably at most 5 mass% based on the total amount of a curable compound in the liquid crystal composition.

Further, various types of compounds may be added for the purpose of improving contrast or stability. For example, in order to improve the contrast, various types of anisotropic dye such as an anthraquinone type, a styryl type, an azomethine type or an azo type may be employed. In such a case, it is preferable that the anisotropic dye is basically soluble to the liquid crystal compound and insoluble to the curable compound. In addition, an antioxidant, a UV-absorber or various plasticizers may also preferably be added from the viewpoint of improving stability or durability.

In a case of adding such various compounds, the total amount is preferably at most 20 mass%, particularly preferably at most 10 mass% based on the total amount of a liquid crystal composition.

Then, an explanation will be made to operation of the liquid crystal optical device 1 obtainable by aligning the liquid crystal composition having positive dielectric isotropy between substrates with electrodes via alignment films having a pretilt angle of at most 10° and curing the curable compound. When a voltage is applied between the first and second transparent electrodes 12 and 22, it is presumed that liquid crystal molecules having positive dielectric anisotropy are aligned vertically to a transparent substrate in each domain, whereby an average refractive indices among adjacent domains become almost the same, to obtain a transparent state. On the other hand, when no voltage is applied between the first and second transparent electrodes 12 and 22, since the nematic liquid crystal produced in the process of curing reaction is randomly oriented between the electrodes as mentioned above, it is presumed that a scattering state is obtained by the difference of average indices among adjacent domains. Thus, since the scattering state and the transparent state can be changed by switching on/off of voltage application, it is possible to display e.g. a desired image.

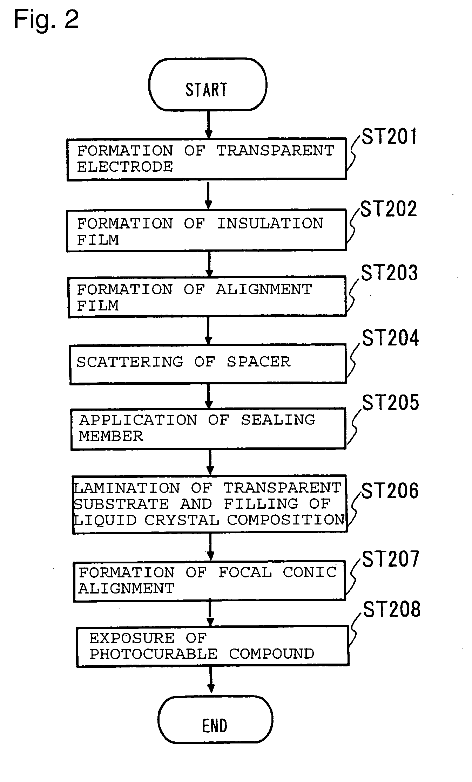

Then, a process for producing the liquid crystal optical device 1 is described. Fig. 2 is a view showing an example of a production flow of a liquid crystal optical device according to the embodiment of the present invention. As shown in Fig. 2, this production flow is constituted by 8 steps that are from ST201 to ST208.

Firstly, on the inner faces of the first and second transparent substrates 11 and 21, transparent electrode films for forming the first and second transparent electrodes 12 and 22 are formed by e.g. a sputtering method or a vacuum vapor deposition method (ST201). ITO is suitable for the transparent electrode films as mentioned above. The transparent electrode films are patterned into a desired character or a patterned shape by a photolithography method to form the first and second transparent electrodes 12 and 22.

Then, the first and second insulation films 13 and 23 are formed so as to cover the first and second transparent electrodes 12 and 22 respectively, by e.g. a sol-gel method, a sputtering method or a vacuum vapor deposition method (ST202).

Then, on the first and second insulation films 13 and 23, the first and second alignment films 14 and 24 are respectively formed (ST203). In order to align a liquid crystal composition showing a chiral nematic phase in a predetermined direction between a pair of substrates with electrodes, the first and second alignment films 14 and 24 are formed so as to be in contact with the liquid crystal. As mentioned above, at least one of the alignment films 14 and 24 respectively formed on the transparent substrates 11 and 21, is formed so as to align the liquid crystal parallel to the inner faces of the transparent substrates 11 and 21. Particularly, it is preferable to form an alignment film having a pretilt angle of at most 10°. Further, rubbing treatment may be carried out to uniformly align the liquid crystal composition. Further, it is possible to realize the present invention even in a case of a construction employing no alignment films.

Then, on the inner faces of the first or second transparent substrate 11 or 21, particles for a spacer 40 are dispersed by using a spraying machine (ST204).

Then, on the inner face of the first or second transparent substrate 11 or 21, a sealing member 30 is applied along the periphery of the first or second transparent substrate 11 or 21 (ST205). Here, for the sealing member 30, e.g. a UV-curable resin or a thermosetting resin may be employed. Here, the sealing member 30 may contain a spacer.

Then, the first and second transparent substrates 11 and 21 are laminated to form a cell, and the cell is filled with a liquid crystal composition (ST206). In such a step, one of at least two seal-broken portions provided on the sealing member is immersed in the liquid crystal composition and suction is made through the other of the seal-broken portions (suction method). Further, a seal-broken portion of a cell having a sealing member provided with at least one seal-broken is immersed in a liquid crystal composition put in a container in vacuum, followed by returning to the atmospheric pressure thereby to fill the liquid crystal composition in the cell by the pressure difference between the internal pressure of the cell and the atmospheric pressure (vacuum injection method). Further, by employing ODF (one-drop-fill) method, on the inner face of the first or second transparent substrate 11 or 21, a predetermined amount of the liquid crystal composition may be dropped, and the first and second transparent substrates 11 and 21 may be laminated with sealing members 30 interposed therebetween. Such an ODF method requires a vacuum equipment, but it is possible to fill the liquid crystal composition in shorter time as compared with the above suction method or the vacuum injection method, and therefore the ODF method.is effective for producing a large-sized liquid crystal optical device. Of course methods other than the above can also be employed. Further, the ODF method may also be called such as a liquid crystal drop method or a vacuum drop method.

Then, chiral nematic liquid crystal in the liquid crystal composition is aligned to be focal conic alignment (ST207), and then a curable compound in the liquid crystal composition is cured (ST208). As a method for focal conic alignment, e.g. application of voltage, quenching after heating or application of magnetic field are devised. The chiral nematic liquid crystal has memory effect of the alignment, and therefore if a liquid crystal composition is once aligned by the above means or the like, its alignment state is maintained even when a curable compound is cured. Accordingly, it is possible to cure a curable compound in a state where no voltage is applied. In a case where the curable compound is a photo-curable compound, the compound is cured by exposing it by using a UV light source. By the exposure, the photocurable compound is cured to form a liquid crystal/cured material composite layer 50. Further, in the case of the above-mentioned ODF method, when a photo-curable sealing member is used as the sealing member 30, the sealing member can be cured at the same time. Here, in a case where no photo-curable resin is employed for the sealing member 30, it is necessary to cure the sealing member individually.

Now, Examples of the present invention are shown below. Haze values were measured by using a direct read haze computer manufactured by Suga Test Instruments Co., Ltd. Further, an N-I phase transition temperature as disclosed below represents a phase transition temperature between a nematic phase and an isotropic phase.

### EXAMPLE 1

To nematic liquid crystal (product name BL-002 manufactured by Merck Co., Inc., Tc=72°C, Δn=0.246, Δε=16) showing positive dielectric anisotropy, a dextro-rotatory optically active material (Paliocolor LC756 manufactured by BASF Corporation, HTP in the nematic liquid crystal is 56) was added to form chiral nematic liquid crystal having the helical pitch of 2 µm. The above dextro-rotatory optical active material is a photo-curable compound, and its content in the above liquid crystal composition is 1.0 mass%. Further, a photo-polymerization initiator (benzoin isopropyl ether) is added in an amount of about 1.0 mass% to the photocurable compound contained in the above liquid crystal composition, to obtain the liquid crystal composition (liquid crystal composition A) according to the present invention. The N-I phase transition temperature of the liquid crystal composition A was 68°C.

Then, on ITO electrodes respectively provided on a pair of glass substrates each having an inner face provided with an ITO thin film (indium tin oxide) as a transparent electrode, SiO₂-TiO₂ type metal oxide thin films (MIC-55 manufactured by Seimi Chemical Co., Ltd.) were formed as an insulation layer. Further, an alignment film made of a polyimide thin film having a pretilt angle of at most 10° is formed thereon. The pair of glass substrates was positioned so as to face each other via spacers made of resin beads of 6 µm in diameter, and a portion other than a hole for injecting the liquid crystal composition was sealed with an epoxy resin to prepare a cell. Into the cell, the above liquid crystal composition A is injected at room temperature by a vacuum injection method, and then the injection hole was sealed with room temperature curable sealing member. Then, such a cell was put on a hot plate having a surface temperature of about 90°C, whereupon a uniform transparent state was shown. Such a cell in the transparent state was quenched by immersing it in water kept at 25°C, whereupon the cell became an opaque state in white to show a uniform light scattering state. Both surfaces of such a cell showing a light scattering state were exposed to UV light which wavelength at center is 365 nm and which intensity is 30 W/m², at room temperature for 10 minutes to cure the curable compound to thereby obtain a liquid crystal optical device. An N-I phase transition of the liquid crystal in the liquid crystal optical device was 72°C.

After the exposure of UV light, the liquid crystal optical device is also showed an opaque state in white, and the light scattering performance was somewhat improved. Then, when voltage of 60 V at 200 Hz in rectangular waveform was applied between the above pair of ITO electrodes, as a result, the liquid crystal optical device became transparent, and when the application of voltage was removed, it showed the original light scattering state again. Namely, a liquid crystal optical device was obtained, which showed a transparent state at the time of voltage application and a scattering state at the time of no voltage application. In the transparent state, the haze value was at most 2%, and its transparency was good. Further, little increase of the haze of the device in the transparent state was observed even though the viewing angle was tilted from the direction perpendicular to the glass substrate. Using a Schlieren optical system of light collection angle of 5°, the contrast between the transparent state and the scattering state of this device was measured at room temperature and as a result, it was 7. An external pressure in one part was applied from a direction perpendicular to the surface of the substrate provided with an electrode of the device of the present invention in a state of no voltage application. The light scattering state of the device was observed after removing the external pressure, but no change was observed.

By employing the liquid crystal composition A of the present invention, differently from PSCT described in Patent Document 5, there is no need of applying voltage to the liquid crystal composition in a process of forming a liquid crystal optical device, and it is sufficient that only a chiral agent having curability is cured. By employing the photo-curable compound as in this embodiment, only by light exposure, a chiral agent having curability is cured to divide the liquid crystal into plural domains, whereby the liquid crystal changes from a chiral nematic phase to a nematic phase. Accordingly, a liquid crystal optical device can be extremely easily obtained, which shows a transparent state at the time of voltage application and a scattering state at the time of no voltage application. Further, in the liquid crystal optical device according to Example 1, since the content of a cured material is low, a haze value in a transparent state is small, and its transparency is good regardless of a viewing angle of the device. Further, even when an external pressure in one part was applied to a cell in an opaque state in white, no inuniformity occurred in its light scattering state after removing the external pressure.

### EXAMPLE 2

The liquid crystal composition A prepared in Example 1 was injected into a cell in the same manner as in Example 1 by a vacuum injection method, and the injection hole was sealed. Then, to the electrode terminal portions of the cell, a bipolar pulse in rectangular waveform having an effective value of 8 V and a pulse width of 500 ms was applied, and the cell became an opaque state in white and showed a uniform light scattering state. In a state of no voltage application, cell showing a light scattering state was exposed to UV light to cure a curable compound thereby to obtain a liquid crystal optical device.

After the exposure of UV light, the liquid crystal optical device showed an opaque state in white in the same manner, and the light scattering performance was somewhat improved. Then, between the above pair of ITO electrodes, voltage of 60 V at 200 Hz in rectangular waveform was applied, and as a result, the liquid crystal optical device became transparent, and when the voltage application was removed, the original light scattering state was shown again. Namely, a liquid crystal optical device was obtained, which showed a transparent state at the time of voltage scattering and a scattering state at the time of no voltage application. The haze value in the above transparent state was at most 2%, and the transparency was good. Little increase of the haze of the device in the transparent state was observed even though the viewing angle is tilted from a direction perpendicular to a glass substrate. Using a Schlieren optical system having a light collection angle of 5°, the contrast between the transparent state and the opaque state in white of this device was observed at room temperature, and as a result, it was 8. In the same manner as in Example 1, even when an external pressure was applied to the surface of a substrate provided with electrodes of this device in a state of no voltage application, no optical inuniformity occurred in a light scattering state of the device after the external pressure was removed.

### EXAMPLE 3

To the same nematic liquid crystal showing positive electric anisotropy as in Example 1, the same dextro-rotatory optical active material as in Example 1 was added to obtain chiral nematic liquid crystal having a helical pitch of 1 µm. The above dextro-rotatory optically active material is a photo-curable compound, and the content in the above liquid crystal composition is 1.8 mass%. Further, in the same manner as in Example 1, about 1 mass% of a photo-polymerization initiator was added to a photo-curable compound contained in the above liquid crystal composition, whereby the liquid crystal composition (liquid crystal composition B) in the present invention was obtained.

Then, the liquid crystal composition B was injected into the same cell as in Example 1 by a vacuum injection method to seal the injection hole. Then, a bipolar pulse in rectangular waveform having an effective value of 12 V and a pulse width of 500 ms was applied to the electrode terminal portions of the cell, whereby the cell became an opaque state in white and showed a uniform light scattering state. The cell showing a light scattering state was exposed to UV light in the same manner as in Example 1, and a curable compound was cured thereby to obtain a liquid crystal optical device.

After the exposure of UV light, the liquid crystal optical device showed an opaque state in white. Then, between the pair of ITO electrodes, voltage of 60 V at 200 Hz in rectangular waveform was applied, and as a result, the liquid crystal optical device became transparent. The haze value in the above transparent state was slightly larger than Example 1. Using a Schlieren optical system having a light collection angle of 5°, the contrast between the transparent state and the opaque state in white of the device was measured at room temperature, and as a result, it was 15.

Also in the case of employing the liquid crystal composition B in the present invention, a liquid crystal optical device showing a transparent state at the time of voltage application and a scattering state at the time of no voltage application can extremely easily be obtained. The optical characteristics of the liquid crystal optical device in Example 3 are good in its contrast of transparent-scattering although the haze in a transparent state is slightly large, as compared with the optical characteristics of the liquid crystal optical device in the above Example 1.

### EXAMPLE 4

To the nematic liquid crystal composition A prepared in Example 1, a curable compound (curable compound P) represented by the following chemical formula (1) that is not an optical active material, was added so that its content becomes 1 mass% based on the total composition including (1).

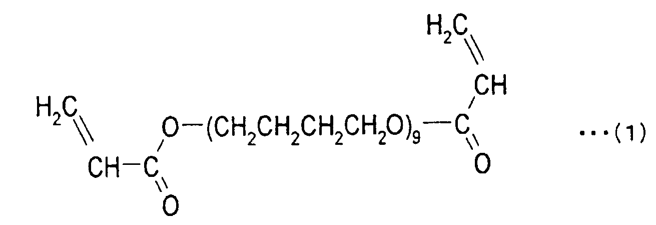

The curable compound P is a curable compound having no mesogenic structure in its molecule. Further, a photo-polymerization initiator (benzoin isopropyl ether) in an amount of about 1 mass% based on the curable compound P, was further added thereto to prepare a liquid crystal composition (liquid crystal composition C). Since the curable compound P is not an optically active material, the helical pitch of the liquid crystal composition C is not different from the helical pitch of the liquid crystal composition A.

Then, in the same manner as in Example 1, the liquid crystal composition C was injected into the same cell by a vacuum injection method, and an injection hole was sealed. The cell was put on a hot plate having the surface temperature of about 90°C, whereupon a uniform transparent state was shown. The cell in the transparent state was quenched by immersing it in water kept at 25°C, whereupon a cell became an opaque state in white and showed a uniform light scattering state. The cell showing the light scattering state was exposed to UV light incident from both surfaces of the substrates in the same manner as in Example 1, whereby a curable compound is cured thereby to obtain a liquid crystal optical device.

After the exposure of UV light, the liquid crystal optical device showed an opaque state in white. Then, voltage of 60 V at 200 Hz in rectangular waveform was applied between the above pair of ITO electrodes, and as a result, the liquid crystal optical device became transparent. The haze value in the above transparent state was at most 2%. When the device in the transparent state was observed in a direction tilted from a direction perpendicular to the glass substrate, the haze was low and the device showed a good transparency. Further, the contrast between the transparent state and the opaque state in white of the device was measured by using a Schlieren optical system having a light collection angle of 5° at room temperature, and as a result, it was 6.

### EXAMPLE 5

To a nematic liquid crystal (Tc=94°C, Δn=0.230, Δε=15) showing positive dielectric anisotropy, a dextro-rotatory optical active material (Paliocolor LC756 manufactured by BASF Corporation, its HTP in the above nematic liquid crystal is 55) was added to prepare chiral nematic liquid crystal having a helical pitch of 2 µm. The above dextro-rotatory optically active material is a photo-curable compound, and its content in the above liquid crystal composition is 1.0 mass%. Further, a photo-polymerization initiator (benzoin isopropyl ether) was added to the liquid crystal composition so that the content became about 1 mass% based on the photo-curable compound contained in the above liquid crystal composition, to obtain the liquid crystal composition (liquid crystal composition F) of the present invention. The N-I phase transition temperature of the liquid crystal composition F was 90°C.

Then, the liquid crystal composition F was injected into the same cell as in Example 1 by a vacuum injection method, whereby the injection hole was sealed. Then, a bipolar pulse in rectangular wave having an effective value of 5 V and a pulse width of 500 ms was applied to the electrode terminal portions of the cell, whereupon the cell became an opaque in white and showed a uniform light scattering state. The cell showing such a light scattering state was exposed to UV light in the same manner as in Example 1 to cure a curable compound, whereby a liquid crystal optical device was obtained. The N-I phase transition temperature of liquid crystal in the liquid crystal optical device was 93°C.

After the UV exposure, the liquid crystal optical device showed an opaque state in white. Then, voltage of 60 V at 200 Hz in rectangular waveform was applied between the pair of ITO electrodes, and as a result, the liquid crystal optical device became transparent. The haze value in the above transparent state was at most 2%, and the transparency was good. The contrast between the transparent state and the opaque state in white of the device was measured by using a Schlieren optical system having a light collection angle of 5° at room temperature, and as a result, it was 8.

### EXAMPLE 6

To a nematic liquid crystal (Tc=94°C, Δn=0.215, Δε=16.4) showing positive dielectric anisotropy, a dextro-rotatory optical active material (Paliocolor LC756 manufactured by BASF Corporation, its HTP in the above nematic liquid crystal is 52) was added to prepare chiral nematic liquid crystal having a helical pitch of 2 µm. The above dextro-rotatory optically active material was a photo-curable compound, and its content in the above liquid crystal composition is 1.0 mass%. Further, a photo-polymerization initiator (benzoin isopropyl ether) was added to the liquid crystal composition so that the content became about 1.0 mass% based on the photo-curable compound contained in the above liquid crystal composition, to obtain the liquid crystal composition (liquid crystal composition G) in the present invention. The N-I phase transition temperature of the liquid crystal composition F was 92°C.

The liquid crystal composition G was injected into the same cell as in Example 1 by a vacuum injection method to seal the injection hole. Then, a bipolar rectangular wave pulse having an effective value of 6 V and a pulse width of 300 ms was applied to the electrode terminal portions of such a cell, whereupon such a cell became an opaque in white and showed a uniform light scattering state. In the state of no voltage application, the cell showing such a light scattering state was exposed to cure a curable compound, whereby a liquid crystal optical device was obtained. The N-I phase transition temperature of the liquid crystal in the liquid crystal optical device was 94°C.

After the exposure of UV light, the liquid crystal optical device showed an opaque state in white. Then, voltage of 60 V at 200 Hz in rectangular waveform was applied between the above pair of ITO electrodes, and as a result, the liquid crystal optical device became transparent. The haze value in the above transparent state was at most 2%, and its transparency was good. Using a Schlieren optical system having a light-collection angle of 5°, the contrast between the transparent state and the scattering state of the device was measured at room temperature, and as a result, it was 8.

### EXAMPLE OF SYNTHESIS Example of synthesizing compound 3

In an eggplant flask, isosorbide (0.5 g, 3.4 mmol), 4-(6-acryloyloxy-hexyloxy)benzoic acid (2.0 g, 6.8 mmol), 1-ethyl-3-(3-dimethylaminopropyl)carbodiimide hydrochloride (1.3 g, 10.2 mmol) and 4-dimethylaminopyridine (0.03 g) were dissolved in dichloromethane (100 mL). It was stirred in a nitrogen atmosphere at room temperature for two hours, and thereafter, it was subjected to a heating-reflux treatment in an oil bath heated at 40°C for 8 hours. Solid product was filtered out, and then an extraction operation was carried out with an ion exchanged water of about pH 4, with sodium bicarbonate water and with ion-exchanged water in order, to carry out an extraction operation. The organic layer was dried by magnesium sulfate anhydride, and filtered, and dichloromethane was removed by distillation using a rotary evaporator. A residue obtained was subjected to purification operation by a column chromatography (developing solvent; hexane:ethyl acetate = 2:1). A white solid product obtained was further recrystallized in ethanol to obtain an objective compound. The amount obtained was 0.62 g, and the yield was 26%.

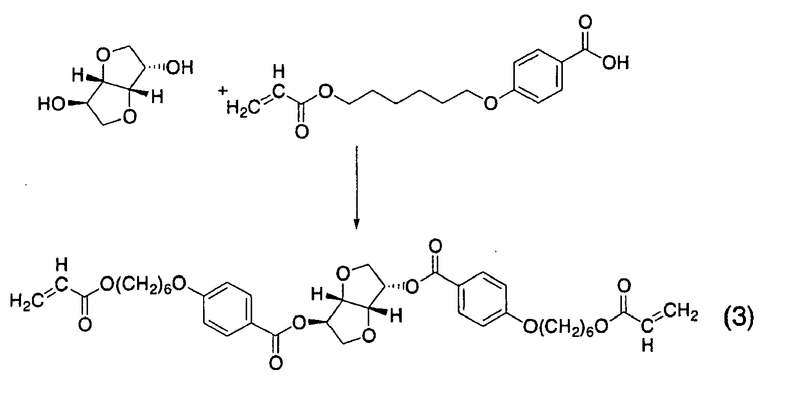

### EXAMPLE 7

To a nematic liquid crystal (product name BL-002 manufactured by Merck & Co., Tc=72°C, Δn=0.246, Δε=16) showing positive dielectric anisotropy, the compound (3) (a dextro-rotatory optically active material having curability, HTP in the above nematic liquid crystal of 42) obtained in Synthetic Example was added to prepare chiral nematic liquid crystal having a helical pitch of 2 µm. The above dextro-rotatory optically active material is a photo-curable compound, and its content in the above liquid crystal composition is 1.2 mass%. Further, a photo-polymerization initiator (benzoin isopropyl ether) in an amount of about 1.0 mass% based on the photo-curable compound contained in the above liquid crystal composition, was added thereto to obtain the liquid crystal composition (liquid crystal composition H) of the present invention, The N-I phase transition temperature of the liquid crystal composition H was 66°C.

Then, the liquid crystal composition H was injected into the same cell as in Example 1 by a vacuum injection method to seal the injection hole. Then, a bipolar pulse in rectangular waveform having an effective value of 7 V and a pulse width of 300 ms was applied to the electrode terminal portions of the cell, whereupon the cell became an opaque state in white and showed a uniform light scattering state. In a state of no voltage application, the cell showing the light scattering state was exposed to UV light in the same manner as in Example 1 to cure a curable compound, whereby a liquid crystal optical device was obtained. The N-I phase transition temperature of liquid crystal in the liquid crystal optical device was 71°C.

After the exposure of UV light, the liquid crystal optical device showed an opaque state in white. Then, voltage of 60 V at 200 Hz in rectangular waveform was applied between the above pair of ITO electrodes, whereupon the liquid crystal optical device became transparent. The haze value in the transparent state was at most 2%, and the transparency was good. Using a Schlieren optical system having a light collection angle of 5°, the contrast between the transparent state and the scattering state of the device was measured at room temperature, and as a result, it was 8.

### EXAMPLE 8

To a nematic liquid crystal (Tc=84.5°C, Δn=0.221, Δε=-6.98) showing a negative dielectric anisotropy, a dextro-rotatory optically active material (Paliocolor LC756 manufactured by BASF Corporation, HTP in the above nematic liquid crystal of 42) was added to prepare chiral nematic liquid crystal having a helical pitch of 2 µm. The above dextro-rotatory optically active material is a photo-curable compound, and its content in the above liquid crystal composition is 1.2 mass%. Further, a photo-polymerization initiator (benzoin isopropyl ether) was added to the liquid crystal composition so that the content became about 1.0 mass% based on the photo-curable compound contained in the above liquid crystal composition to obtain the liquid crystal composition (liquid crystal composition I) of the present invention. The N-I phase transition temperature of the liquid crystal composition was 83°C.

Then, the liquid crystal composition I was injected into the same cell as in Example 1 by a vacuum injection method to seal the injection hole. Then, a bipolar pulse in rectangular waveform having an effective value of 7 V and a pulse width of 300 ms was applied to the electrode terminal portions of the cell, whereupon the cell became turbid and showed a uniform light scattering state. In a state of no voltage application, the cell showing such a light scattering state was exposed to UV light in the same manner as in Example 1 to cure a curable compound, whereby a liquid crystal optical device was obtained. The N-I phase transition temperature of liquid crystal in the liquid crystal optical device was 84.5°C.

After the exposure of UV light, the liquid crystal optical device showed an opaque state in white. Then, voltage of 60 V at 200 Hz in rectangular waveform was applied between the above pair of ITO electrodes, and as a result, the liquid crystal optical device became transparent. The haze value in the above transparent state was at most 2%, and the transparency was good. Using a Schlieren optical system having a light collection angle of 5°, the contrast between the transparent state and the scattering state of the device was measured at room temperature, and as a result, it was 5.

### COMPARATIVE EXAMPLE 1

As a curable compound, urethane acrylate oligomer (Aronix M1200 manufactured by Toagosei Co., Ltd.) and isooctyl acrylate were blended so that their mass ratio became 12/7 to obtain a uniform curable composition (curable composition Q). Then, a nematic liquid crystal (product name BL-002 manufactured by Merck & Co., Tc=72°C, Δn=0.246, Δε=16) showing the same positive dielectric anisotropy as in Example 1 and the curable composition Q were blended so that their mass ratio became 31/19 to obtain a uniform composition. Further, a photo-polymerization initiator (benzoin isopropyl ether) in an amount of about 1 mass% based on the curable composition contained, was added and uniformly dissolved to obtain a composition (composition D). At room temperature, the composition D became an isotropic phase showing no liquid crystal state, and showed a uniform transparent state.

Then, a cell provided with polyimide alignment films showing a pretilt angle of at most 10° formed on substrate surfaces that contact with the liquid composition D, was prepared in the same manner as in Example 2 except that spherical beads of 8 µm in diameter as a spacer was provided between transparent electrodes, and the liquid crystal composition D was injected into the cell by a suction injection method, and the injection hole was sealed. In order to use the suction injection method, at least two holes were provided at the sealing portion. After the injection of the liquid composition D, the cell showed a uniform transparent state. Then, at room temperature, the cell was subjected to UV light which wavelength in center was 365 nm and which intensity was 10 W/m² incident from glass substrates on both sides, for three minutes to cure the liquid crystal composition D, whereby a liquid crystal optical device was obtained.

After the UV exposure, the liquid crystal optical device showed an opaque state in white. Then, voltage of 40 V at 200 Hz in rectangular waveform was applied between the above pair of ITO electrodes, whereupon the liquid crystal optical device became transparent. The haze value in the transparent state was at most 2%, and when the transparency of the device for incident light in a direction perpendicular to the glass substrates of the device was observed by using a Schlieren optical system having a light collection angle of 5°, the transparency was 84% including reflections on glass substrate surfaces and absorption of incident light in the transparent electrode layer. Then, the transmittance was measured in the same measurement system under the condition that the device was tilted by 45° to the incident light, and as a result, the transmittance was 72%. When the device in a transparent state was observed as the viewing angle was tilted from the direction perpendicular to the glass substrates, the haze gradually increased, and the good transparency was gradually lost. In the same measurement optical system, the contrast between the transparent state and the scattering state of the device was measured at room temperature, and as a result, it was 5.

### COMPARATIVE EXAMPLE 2

To a nematic liquid crystal showing the same positive dielectric anisotropy as in Example 3, a non-curable dextro-rotatory optical active material (R-1011 manufactured by Merck & Co., Inc.) was added to prepare chiral nematic liquid crystal having a helical pitch of 1 µm. Then, the curable compound (curable compound R) shown in the following chemical formula (2) which is not an optical active material, was added thereto so that its content would be the same as in the curable compound contained in the liquid crystal composition B in Example 3, namely, 1.8 mass%.

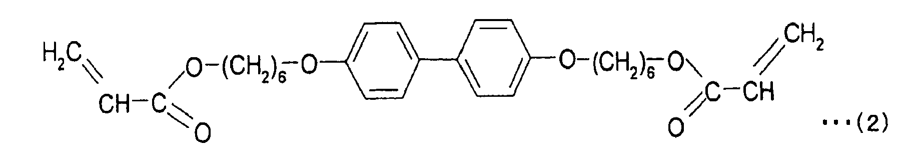

Further, a photo-polymerization initiator (benzoin isopropyl ether) was added in an amount of about 1 mass% based on the curable compound R contained in the above liquid crystal composition, to obtain the liquid crystal composition (liquid crystal composition E) in the present invention.

Then, by means of a vacuum injection method, the liquid crystal composition E was injected into a cell prepared in the same manner as in Example 3 except that a spacer of resin beads of 4 µm in diameter was provided between substrates with electrodes faced each other, whereby injection holes were sealed. Then, a bipolar pulse in rectangular waveform having an effective value of 12 V and a pulse width of 500 ms was applied to electrode terminal portions of the cell, whereupon the cell became an opaque state in white and showed a uniform light scattering state. The cell was exposed to UV light in the same manner as in Example 3, and a curable compound was cured thereby to obtain a liquid crystal optical device.

After the UV exposure, the liquid crystal optical device showed an opaque state in white. Then, voltage of 60 V at 200 Hz in rectangular waveform was applied between the above pair of ITO electrodes, and as a result, the liquid crystal optical device became transparent, and when the voltage application was quickly removed, a transparent state with a weak light scattering was observed. Voltage of 60 V in rectangular waveform was applied thereto again, whereupon the liquid crystal optical device became transparent, and then the application voltage was slowly removed to be in no voltage application state, whereby the liquid crystal optical device showed a light scattering state.

In the liquid crystal optical device, a liquid crystal in the liquid crystal/cured material composite is chiral nematic liquid crystal containing a non-curable optical active material. Namely, the memory effect of the alignment inherently given to chiral nematic liquid crystal phase is remained therein, a bistable state showing a different liquid crystal alignment depending upon the removal speed of the application voltage is shown, and a light scattering state at the time of no voltage application is unstable.

### INDUSTRIAL APPLICABILITY

The liquid crystal device according to the present invention is suitable particularly for sunroofs of automobiles, and the device can be also used for other applications. For example, it is applicable to windows (for automobiles.(side windows, door glasses, rear quarters etc.), for architectures, for airplanes, for ships, for railroad vehicles etc.), skylights, partitions, materials for interior or exterior of architectures such as doors, sign boards, commercial advertising mediums, large-sized partition equipment, projection screens combined with projection type display devices, finders for cameras or digital cameras or the like. By employing the device for a door of a refrigerator, it is possible to recognize foods contained in the refrigerator without opening the door of refrigerator. Further, it is possible to display graphics and patterns combined together or to display characters to provide information to users. Furthermore, decorations such as characters may be provided on a transparent plate as required.

The entire disclosure of Japanese Patent Application No. 2006-194172 filed on July 14, 2006 including specification, claims, drawings and summary is incorporated herein by reference in its entirety.

## Claims

1. A liquid crystal optical device comprising:
a pair of insulating substrates, of which at least one is transparent,
electrodes formed on respective inner faces of the insulating substrates, and
a composite of a nematic liquid crystal and a cured product, interposed between the inner faces of the insulating substrates, wherein:
the composite is obtained by curing the following curable compound in the following chiral nematic liquid crystal composition in a state where the liquid crystal composition is interposed between the inner faces of the insulating substrates and the liquid crystal is aligned:
chiral nematic liquid crystal composition: a liquid crystal composition comprising a nematic liquid crystal and a curable compound, and showing a chiral nematic phase, wherein at least a part of the curable compound is an optically active material having an optical rotatory power, and the optically active material having an optical rotatory power consists substantially solely of the curable compound.

2. The liquid crystal optical device according to Claim 1, which is obtained by curing the curable compound in a state where no voltage is applied to the electrodes.

3. The liquid crystal optical device according to Claim 1 or 2, wherein the curable compound is cured in a state where the chiral nematic liquid crystal composition is in focal conic alignment.

4. The liquid crystal optical device according to any one of Claims 1 to 3, wherein the chiral nematic liquid crystal composition further contains a curable compound which is not an optically active material.

5. The liquid crystal optical device according to any one of Claims 1 to 4, wherein the total amount of the curable compound is from 0.1 to 20 mass% based on the entire chiral nematic liquid crystal composition.

6. The liquid crystal optical device according to any one of Claims 1 to 5, wherein the dielectric anisotropy of the chiral nematic liquid crystal composition is positive.

7. A process for producing a liquid crystal optical device comprising a composite of nematic liquid crystal and a cured product, which comprises:
a step of forming electrodes on inner faces of a pair of insulating substrates, of which at least one is transparent,
a step of bonding the insulating substrates so that the inner faces of the insulating substrates face each other via the following chiral nematic liquid crystal composition, and
a step of forming the composite by curing the curable compound in the liquid crystal composition in a state where the liquid crystal composition is interposed between the inner faces of the insulating substrates, and the liquid crystal is aligned:
Chiral nematic liquid crystal composition: a liquid crystal composition comprising a nematic liquid crystal and a curable compound, and showing a chiral nematic phase, wherein at least a part of the curable compound is an optically active material having an optical rotatory power, and the optically active material having an optical rotatory power consists substantially solely of the curable compound.

8. The process for producing a liquid crystal optical device according to Claim 7, wherein the curing of the curable compound is carried out in a state where no voltage is applied to the electrodes.

9. The process for producing a liquid crystal optical device according to Claim 7 or 8, wherein the curable compound is cured in a state where the chiral nematic liquid crystal composition is in focal conic alignment.

10. The process for producing a liquid crystal optical device according to Claim 9, wherein a voltage is applied to the chiral nematic liquid crystal composition for the focal conic alignment.

11. The process for producing a liquid crystal optical device according to Claim 9, wherein the chiral nematic liquid crystal composition is heated or cooled for the focal conic alignment.
